# EUROPEAN PATENT SPECIFICATION

(11) **EP 3 267 783 B1**
(45) Date of publication and mention of the grant of the patent: **24.10.2018**
(21) Application number: 15708834.5
(22) Date of filing: 11.03.2015
(51) Int. Cl.: A01G 3/02

(54) **MANUALLY OPERATED CUTTING DEVICE**
MANUELL BETRIEBENE SCHNEIDVORRICHTUNG
DISPOSITIF DE COUPE ACTIONNÉ MANUELLEMENT

(43) Date of publication of application: 17.01.2018
(73) Proprietor: Husqvarna AB, 561 82 Huskvarna (SE)
(72) Inventor: WANNENWETSCH, Christian, 89182 Bernstadt (DE); REH, Bernhard, 89150 Laichingen (DE); ARNDT, Wolfgang, 89079 Ulm (DE)
(74) Representative: Finkele, Rolf
(86) International application number: PCT/EP2015/055024
(87) International publication number: WO 2016/141979

(56) References cited:
- DE-U1-202014 100 138
- US-A- 2 821 018
- US-A1- 2013 091 713

## Description

The underlying invention is related to a manually operated cutting device, such as for example manually operated secateurs.

Secateurs are known in a wide variety of different configurations. In some known secateurs configurations, it is possible to adjust the maximal available opening angle of the cutting blades, to thereby enable a user for example to adjust, to a certain degree, the operation mode of the secateurs to his hand size, or to adjust the available opening angle, to a certain degree, to the diameter of the objects to be cut.

For example, DE 10 2013 101 008 B3 describes secateurs in which the cutting blade opening angle can be variably adjusted by means of a threaded coupling mechanism. DE 1 180 273 B describes pruning shears comprising on a lateral cheek of one of the gripping handles a pivot mechanism operable to restrict the available opening angle of the cutting blades to an intermediate opening angle lying between the fully closed and fully opened state of the cutting blades. GB 2 182 879 A describes a garden pruner in which a pivot mechanism is associated with a cam disc for varying the position of a stop surface restricting the maximal available opening angle. A similar mechanism for restricting the maximal opening angle in connection with scissors is described in DE 10 2005 052 970 A1. US 2013/091713 A1 describes a further mechanism for restricting the maximal opening angle in connection with a branch scissors.

The known solutions in particular leave room for further improvements, in particular in view of simplified design and/or improved handling.

In view of this, it is an object of the invention to provide a manually operated cutting device, in particular secateurs or pruning or garden shears, implemented with an alternative solution enabling user friendly adjustment of the operational mode, in particular user friendly adaptation of the available opening angle of the cutting blades, while at the same time being of comparatively easy and straight forward mechanical design.

This object is obtained, in accordance with embodiments of the underlying invention, in particular with the features of independent claim 1. Further embodiments and/or alternatives result from the dependent claims, and may also result from the description as given hereinbelow.

In the underlying invention a manually operated cutting device or cutting tool is provided, which may for example be implemented as secateurs, pruning shears, or garden shears.

The characteristic of being manually operable may be interpreted as allowing a user to execute a cutting action, on for example a branch, twig or similar, by manually operating a cutting blades of the cutting device, by, for example, pressing together or releasing grip handles of the cutting device associated with the cutting blades to thereby move the cutting blades towards and away from each other in accordance with the exerted manual action.

At least one cutting blade is provided that is pivotably secured or assembled at a pivot joint of the cutting device. The pivot joint may for example be a screw, threaded bolt, rivet or similar, adapted to adequately hold together cutting blades adjoining each other.

The cutting device of the present invention comprises a locking lever assembly operable to restrict, in one intermediate locking position, the available opening angle of the blade to an intermediate opening angle lying between the opening angles defined by the fully closed state and fully opened state of the blade.

The intermediate locking position may for example be represented by a specific operating or working position of the locking lever assembly in which the maximally available opening angle of the cutting blade is restricted to the intermediate opening angle.

The fully closed state may for example correspond to an operational condition or state of the cutting device in which cutting blades thereof are rotated towards each other as far as possible such that no further movement towards each other is possible.

The fully opened state may for example correspond to an operational condition in which the cutting blades, or cutting edges thereof, are moved, i.e. pivoted, away from each other as far as is possible by the pivot joint as such, i.e. without imposing pivotal restrictions on the cutting blades.

In the cutting device of the present invention, the locking lever assembly comprises a stop pawl, for example one of a stop element or stop finger, beam, projection or arm, a latch or latching finger, beam, projection, or arm.

The stop pawl is attached to a manually operable slider, coupled to or associated with a linear slide to be moveable into and out of the intermediate locking position by a movement in lengthwise direction of the cutting device.

The linear slide may for example comprise a linear cutout or through opening running in lengthwise direction of the cutting device, corresponding for example to the lengthwise direction of a handle or hand grip in the closed configuration of the cutting device. The linear slide may comprise straight or straight-lined sliding elements, such as recesses and/or projections configured to guide the slider upon manual operation of a user in a linear movement along the linear slide.

Providing the cutting device with such a locking lever assembly and stop pawl makes it possible to adapt the available opening angle of the cutting blades to respective needs, such as the hand-size of the user and/or size or diameter of the object, e.g. twigs or branches to be cut, in a comparatively easy way, in particular with a single hand. Therefore improved handling properties may be obtained. In addition, the locking lever assembly may be implemented in a comparatively easy mechanical design.

In embodiments, the locking lever assembly may further be implemented or configured to be operable to lock, in a locking operational state, the cutting blade in the closed state, and, in an unlocking operational state, to enable unrestricted rotation of the cutting blade between the fully closed and fully opened state.

This in particular shall mean that the locking lever may be configured to be positioned
i) in the locking operational state in which operation of the cutting device is blocked, i.e. the cutting blades are disabled and locked in the closed state,
ii) in the intermediate locking position in which the range of available pivot angles of the cutting blade is confined between the closed state and the intermediate opening angle, and
iii) in an unlocked or unlocking operational state in which unrestricted rotation of the cutting blade between the closed and fully opened state is possible and available.

Thus, the locking lever or slider in such embodiments provides a multi-functional operational element that may be operated in an easy way, for example by one hand, for example by a single finger, such as the thumb.

In embodiments, the slider may have an arched cross section, resulting for example from an overall a barrel vault shape or configuration of the slider. The slider may be configured to be slidably coupled to an elongated arched recess, such for example in a barrel arch shaped configuration or design. The arched recess may in embodiments be implemented on an outer lateral side of an operating arm, of for example a handle or grip handle, associated with a counterpart cutting blade.

The proposed shapes and cross sections, in particular barrel vault and barrel arch type designs, may be beneficial with respect to operability, slidability and stability of operation.

In embodiments, the slider may comprise a locking contour, for example indexing contour. The indexing contour may for example be implemented as a certain structure or pattern having recesses and/or projections and the like.

The indexing or locking contour may be implemented and configured for locking the slider at least in a first indexing position associated with the intermediate locking position. Here, the first indexing position may for example be configured such that the locking lever, in particular stop pawl, is positioned such that rotation of the cutting blade, or the opening angle, is restricted to the intermediate opening angle.

The indexing contour in embodiments may for example be implemented or be provided on one of at least two lateral arms of the slider, projecting, for example in a downward direction, from an apex section of the slider.

In embodiments, the indexing structure may comprise at least one of a second and third indexing position respectively assigned to the fully closed position and fully opened position. In such embodiments, the second indexing position, in which the slider for example may be latched or locked in place, may be provided, and latching or locking the slider in the second indexing position may position the stop pawl such that it locks the cutting blades in the closed state. In the third indexing position, the slider may be latched or locked in place such that the stop pawl is positioned so as not to impede rotation of the cutting blades, meaning that the cutting blades may be operated freely between the fully closed and fully opened state. Providing respective indexing positions may be beneficial for operability of the cutting device. In particular automatic locking in place the slider in one of the indexing positions may facilitate operation and use of the cutting device. The indexing structure may for example comprise a projection-and-recess type arrangement in which, for example, projections and corresponding recesses are provided on the slider, for example on at least one of the arms and the arched recess slidingly accommodating the slider in the mounted state.

In embodiments, the linear slide may comprise a linear guide, comprising for example a linear projection, bulge or flange, which guide may be implemented on an inner side at a distal end of one of the lateral arms, or alternatively on both of the lateral arms. The linear guide may be implemented and designed to engage a counterpart guide which may be implemented at or in the arched recess. Thus, a type of guiding track structure may be provided that is configured for securely guiding the slider within and along the arched recess. In particular embodiments, the linear guide and linear counterpart guide may be implemented as a guide-bar and guide-rail structure. Obviously, a linear guide is suitable for providing adequate guidance of the slider whilst preventing undesirable jamming during operation.

In the cutting device of the present invention, the locking lever comprises at least one cantilevered beam section, such as a cantilevered arm or projection. The cantilevered beam is oriented in parallel to an opening plane defined by the cutting blade. The opening plane may for example be a plane lying in parallel to a rotational plane in which rotational movement of a cutting edge of the cutting blade occurs. The cantilevered beam section may for example project in a direction towards the pivot joint, and may be movable, by operating the slider forth and back, towards and away from the pivot joint to thereby engage or disengage a corresponding engagement or locking structure for example associated with the cutting blade.

The cantilevered beam section has on its distal free end, e.g. on the end spaced apart from the point of attachment, an abutment for abutting, in the intermediate angle rotational position of the cutting blade, against a counterpart abutment to thereby restrict rotation of the cutting blade to the intermediate angle.

The abutment and counterpart abutment may be implemented as corresponding surfaces, for example oriented perpendicularly to the opening plane or rotational plane of the cutting blade. The surfaces may for example be provided on respective abutment and counterpart abutment shoulders.

In embodiments in which respective abutment surfaces or abutment shoulders are provided, a restriction of the maximally available pivotal angle to the intermediate angle may for example be obtained in that the surfaces or shoulders clash against each other as soon as the intermediate angle is reached. This principle may also be applied to the locking function in the fully closed state, and also to several intermediate locking positions.

In embodiments, the locking lever may comprise as one of the at least one cantilevered beam sections a locking surface for locking engagement with a counterpart locking surface to thereby lock the cutting blade in the fully closed state. Thus, locking or latching of the cutting blade in the closed state and restricting pivotal movement to the intermediate angle may be based on the same functional principle, which may simplify the overall construction of the cutting device.

In embodiments, at least one of the abutment surface, counterpart abutment surface, locking surface and counterpart locking surface may be inclined with respect to the lengthwise direction of a corresponding cantilevered beam or arm so as to generate a self-locking effect between the surface and corresponding counterpart surface. For example, respective surfaces may be inclined in such a way that even in case of only partial engagement, a driving force is generated that forces or drives corresponding engagement or locking parts or surfaces into full engagement.

In embodiments, the handles or grip handles associated with the cutting blades may be spring loaded such that the cutting blades are urged to the fully opened state.

In embodiments, in which such spring loads are available, a corresponding spring force may urge abutting surfaces against each other, such that the stop pawl or slider is forced into place for proper engagement. Thus, a comparatively user friendly operation of the cutting device may be obtained.

In the cutting device of the present invention, the stop pawl and slider are implemented as separate parts fixed to each other. It shall be noted, that in alternative embodiments not falling within the scope of the present invention, the stop pawl and slider may be implemented as an integrated one piece part.

In the cutting device of the present invention, the stop pawl comprises a fixing head, for example in the form of a platform, of for example rectangular shape.

The fixing head is configured and arranged for fixing the stop pawl to the slider. In embodiments, the stop pawl and fixing head may be implemented such that they project from opposite sides of a slotted guide recess provided in a handle bar of the cutting device. The slotted guide recess may for example be provided in the arched recess, specifically in the apex section of the arched recess. A neck section or similar interconnecting the stop pawl and fixing head may reach through the slotted guide recess, to thereby support slidability of the locking lever mechanism. The fixing head, in particular when implemented as a platform, may provide additional guidance stability for the slider, and thus may enhance operability of the stop pawl.

In embodiments, the fixing head, for example when implemented as a rectangular platform, may comprise a sliding contour for sliding engagement with a slotted guide recess provided and implemented in a handle bar, for example the in the arched recess, wherein the engagement may be such that the fixing head is guided to be moveable in lengthwise direction of the slotted guide recess. Such a sliding contour may contribute to avoid jamming of the slider in the course of adjusting or setting the slider to one of the positions assigned to or associated with the closed state, intermediate opening angle or the fully opened state.

In the cutting device of the present invention, the stop pawl has an overall L-shaped configuration, for example L-shaped form, cross section, or structure. The L-shaped configuration comprises a bar-shaped neck section interconnecting the fixing head, for example provided on one axial or longitudinal end of the locking lever, with at least one cantilevered beam section, for example provided at the other axial or longitudinal end of the locking lever. Using an L-shaped configuration may be advantageous with embodiments in which the locking lever provides several locking configurations assigned for example to the fully closed state, the intermediate opening angle and to the fully opened state.

In embodiments, the at least one cantilevered beam section may be implemented to project, for example from a/the neck section of the locking lever, towards the pivot joint, i.e. in a direction essentially facing towards the pivot joint. For example, the cantilevered section of the locking lever or stop pawl may project from the neck in a direction oriented parallel to the direction of movement of the slider, wherein the slider may be configured to be slidable towards and away from the pivot joint in a linear movement.

In embodiments, in which the stop pawl and fixing head are implemented to project from opposite sides of the slotted guide recess that is provided in the handle bar of the cutting device, preferably in the apex section of the arched recess, the slotted guide recess may be configured such that the stop pawl is moveable in a linear motion towards and away from the pivot joint. In such embodiments a counterpart locking element implemented for engagement with the stop pawl may for example be provided as a cog, ratchet, or rack wheel, that may be designed integrally with the cutting blade.

In embodiments, at least one first slider locking position may be associated with at least one intermediate locking position in which the available opening angle of the blade is restricted to a respective intermediate angle. The at least one first slider locking position may be positioned between a second and third slider locking position. The second slider locking position may be located closest to the pivot joint and be associated with the fully closed state. The third slider locking position may be located farthest away from the pivot joint and may be associated with the unlocked position of the cutting blade. The first to third locking positions may in embodiments be provided in reverse order.

In embodiments, the locking lever assembly may comprise at least one arcuate recess, implemented for example as a toothed segment or cog-type segment. In case of several arcuate recesses, an arcuate recess structure may be provided having several separate yet merging recesses.

The arcuate recess(es) may in embodiments extend, with respect to the pivot joint, in a circumferential direction and parallel to the opening plane or rotational plane of the cutting blade(s) or cutting edges of the cutting blade(s).

The arcuate recess(es), may be associated with, for example formed integrally with, the cutting blade. The recess(es) may define at at least one peripheral end in circumferential direction, relative to the pivot point, a counterpart abutment surface or counterpart abutment surfaces, for example implemented on a corresponding counterpart abutment shoulder(s).

The counterpart abutment surface in embodiments may be implemented such that it can abut or clash against an abutment surface, or shoulder, of the stop pawl in case that the actual opening angle of the cutting blade corresponds to the intermediate opening angle, or the fully closed state. In embodiments, normal vectors of the abutment surface and counterpart abutment surface may be oriented parallel to the opening plane or pivoting plane of the cutting blade(s).

Using or providing arcuate recesses, for example in the form of ring segment shaped recesses, as the counterpart locking or latching elements may lead to comparatively simple mechanical designs.

In embodiments, one of the at least one arcuate recess may be associated with the fully closed state and may define at a peripheral end thereof a counterpart locking surface for locking engagement with a locking surface of the stop pawl in the fully closed state of the cutting blade.

In embodiments, the maximal opening angle, for example corresponding to the fully opened cutting blade configuration, may lie in the range of about 36°, and the intermediate opening angle may lie in the range of about 22°.

In embodiments, the locking lever may be associated with a grip handle of a further cutting blade acting as a counter cutting blade for the cutting blade. For example, the locking lever may be provided or attached to a stem of a respective grip handle. Thus, the locking lever may be associated with the grip handle or stem of a counterpart cutting blade, while a counterpart engagement or locking structure adapted to cooperate with the locking lever, in particular stop pawl, may be provided at the cutting blade, for example in form of a recessed wheel or similar.

As can be seen from the above description, but also from the below description of exemplary embodiments of the underlying invention, the abovementioned object may and can be obtained.

Exemplary embodiments of the invention will now be described in connection with the annexed figures, in which:
- FIG. 1: shows a perspective view of secateurs according to an embodiment of the invention;
- FIG. 2: shows a longitudinal sectional view of the secateurs in a fully closed state;
- FIG. 3: shows a longitudinal sectional view of the secateurs in an intermediate opening position;
- FIG. 4: shows a longitudinal sectional view of the secateurs in a fully opened position;
- FIG. 5: shows a side view of a handle bar of the secateurs;
- FIG. 6: shows a slider of a locking lever assembly of the secateurs;
- FIG. 7: shows a cross sectional view of the slider according to line B-B in FIG. 5;
- FIG. 8: shows a stop pawl of the locking lever assembly of the secateurs;
- FIG. 9: shows longitudinal sectional view of one of the handle bars of the secateurs;
- FIG. 10: shows a top view of the handle bar of FIG. 9; and
- FIG. 11: shows a cross sectional view of a part of the locking lever assembly of an alternative embodiment;

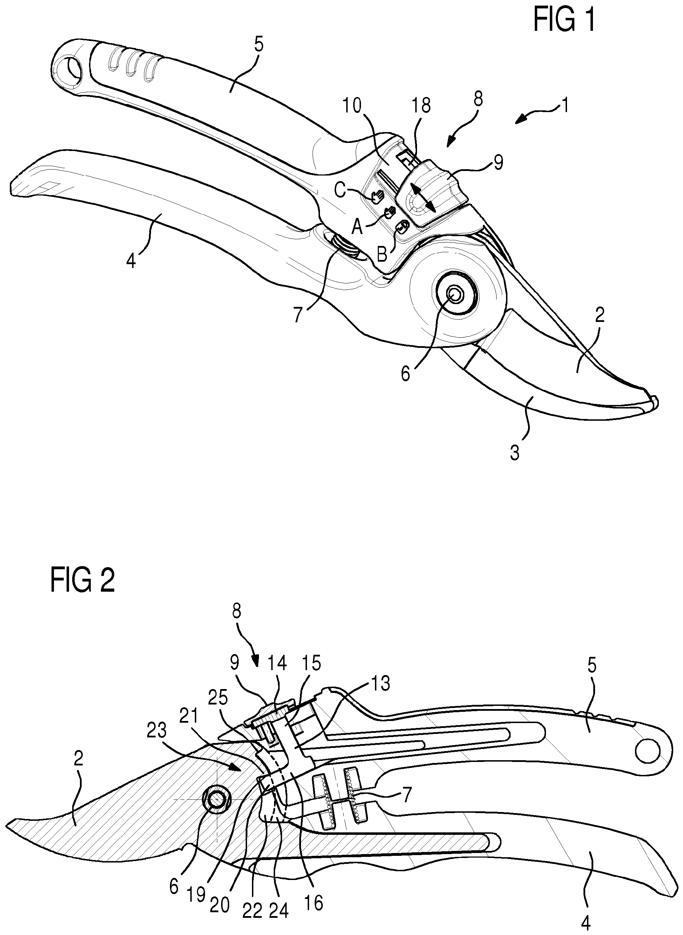

FIG. 1 shows a perspective view of secateurs 1, as an example of a cutting device, according to an embodiment of the invention. The secateurs 1 may comprise a cutting blade 2 and a counter cutting blade 3 respectively coupled with a first handle 4 and second handle 5 for manually operating the secateurs 1.

The blades 2, 3 may be pivotably secured at a pivot joint 6 to rotate the cutting blades 2, 3 and cutting edges provided thereon against each other. A cutting plane (not shown), e.g. a plane in which the cutting edges of the cutting blades move during operation of the secateurs, may correspond to a plane parallel to a center plane of the secateurs 1 with respect to the longitudinal direction of the secateurs 1.

The secateurs 1 may comprise a spring 7 acting on the handles 4, 5 of the secateurs 1 and generating a spring force urging the handles 4, 5 apart from each other to thereby open the cutting blades 2, 3. It shall be noted, that in the configuration in FIG. 1, the secateurs 1 are in the closed position, e.g. in the position in which the cutting blades 2, 3 are pivoted as close as possible towards each other, and the spring 7 is in the compressed state. A corresponding opening angle may be defined as a Zero degree opening angle.

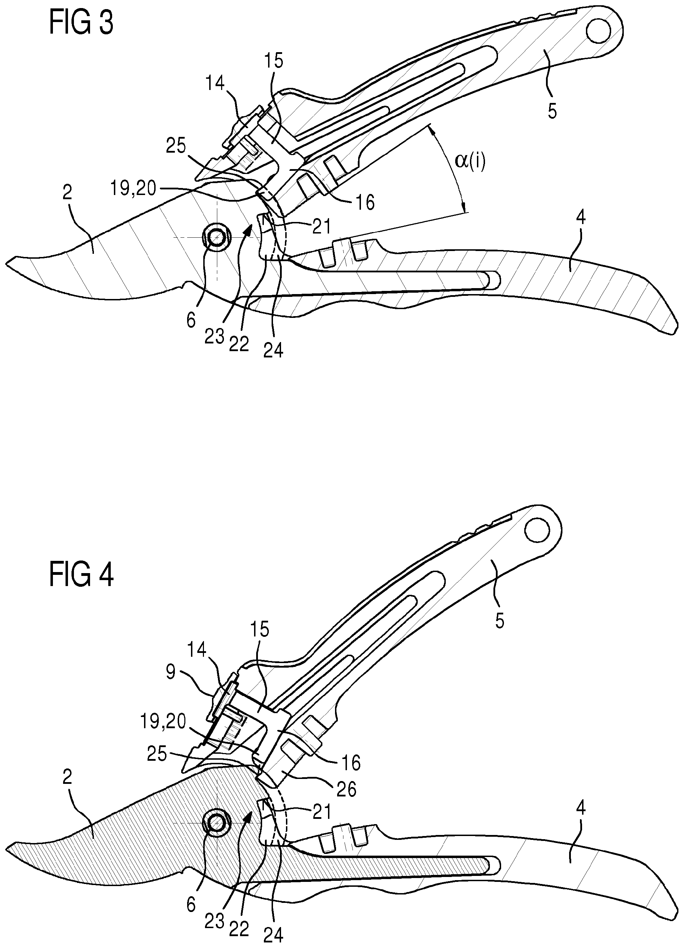

The secateurs 1 further may comprise a locking lever mechanism 8 adapted and configured for latching or locking the cutting blades 2, 3 in the closed state, and for restricting the available opening angle of the cutting blades 2, 3 to an intermediate opening angle lying between the fully closed state, as shown in FIG. 1 and the fully opened state (cf. FIG. 4).

The locking lever mechanism 8 may comprise (as far as can be seen from FIG. 1) a manually operable slider 9 for manually setting the locking lever mechanism 8 to a first locking configuration A associated with the intermediate opening angle in which the pivoting angle of the cutting blades 2, 3 is restricted between the closed position and the intermediate opening angle lying between the fully closed position and fully opened position, a second locking configuration B associated with the fully closed state, and a third locking configuration C associated with unrestricted pivotal movement of the cutting blades 2, 3.

As indicated by the pictograms in the region of the slider 9, the first locking configuration A may correspond to an operational mode suitable for comparatively small hands. The second locking configuration B may correspond to a locked state of the cutting blades in which operation of the cutting blades is inhibited. The third locking configuration C, in which unrestricted pivotal movement of the cutting blades 2, 3 is possible, may correspond to an operational mode suitable for comparatively large hands.

The second handle 5, where the slider 9 of the locking lever mechanism 8 is provided may comprise, with respect to the longitudinal extension of the secateurs 1, an elongated arched recess 10, in which the slider 9, having a corresponding arched cross section, is guided to be linearly moveable in forth and back direction, indicated as a double arrow in FIG. 1.

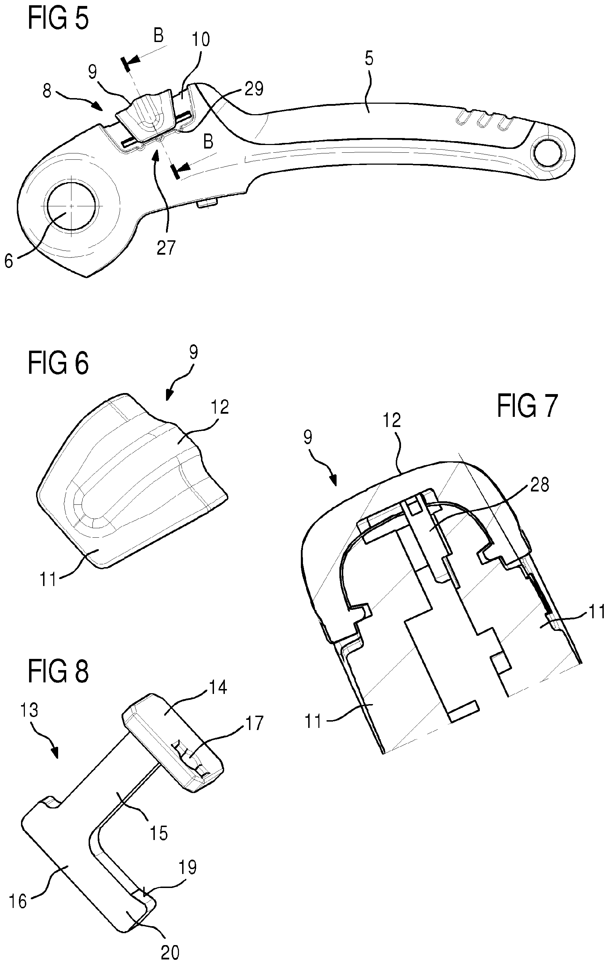

The slider 9, as can also be seen from FIG. 6 and FIG. 7 respectively showing a perspective and cross sectional view, and arched recess 10 may be implemented in a saddle-like configuration such that the slider 9 embraces the recess 10 with two lateral arms 11 extending downwards from an apex-section 12 of the slider. Such a saddle-type coupling interface, in which the slider 9 and arched recess 10 may be implemented in a barrel vault and barrel arch shaped configuration, may be advantageous for avoiding jamming of the slider 9 while being moved forth and back in the arched recess 10.

FIG. 2 shows a cross-sectional view of the secateurs in FIG. 1 in a fully closed state. From FIG. 2, some more details of the locking lever mechanism 8 can be inferred from. The locking lever mechanism 8 may comprise a stop pawl 13 attached to the slider 9, or implemented integrally with the slider 9.

The stop pawl 13, as can also be seen in more detail from FIG. 8, may comprise a fixing head 14, a neck section 15, and a cantilevered beam 16, interconnected to each other such that the stop pawl 13 has an overall L-shaped for or cross section. The fixing head 14, or platform, may comprise a fastening structure 17 (cf. FIG. 8) in case that the stop pawl 13 and slider 9 are implemented as two separate parts, and the slider 9 may comprise a corresponding counterpart fastening structure (not shown), respectively configured such that the slider 9 and stop pawl 13 may be mechanically coupled to each other.

As can be seen from FIG. 1 and 2, the fixing head 14 is located on an outer side of the arched recess 10, whereas the stop pawl 13 is located at the inner side of the arched recess 10, wherein the neck section 15 reaches through a slotted recess 18 (cf. FIG. 1) and is guided therein in lengthwise direction.

In the locked state as shown in FIG. 2, an abutment surface 19 (cf. also FIG. 8) provided at an abutment shoulder 20 of the stop pawl 13 engages, i.e. abuts or clashes, against a counterpart first abutment surface 21 of a first arcuate recess 22 in particular of ring-segment shape, indicated by a dashed line, of a ratchet-type wheel segment 23 of the cutting blade 2.

The ratchet-type wheel segment 23 of the cutting blade 2 comprises a further arcuate recess 24, also of ring segment shape and indicated by a dotted line in FIG. 2, lying, with respect to the pivot joint 6, radially outside of the arcuate recess 22, and being with respect to the circumferential direction longer than the arcuate recess 22.

The further arcuate recess 24 defines on an end in circumferential direction a counterpart second abutment surface 25 adapted to abut against the abutment surface 19 of the cantilevered beam 16 in the first locking configuration A, in which the pivotal movement of the cutting blade 2 is restricted to the intermediate opening angle α(i) (alpha-I, cf. FIG. 3).

FIG. 3 shows a cross-sectional view of the secateurs 1 in FIG. 1 in the intermediate opening position configuration as described beforehand. As can be seen from FIG. 3, the abutment surface 19 of the cantilevered beam 16 abuts against the counterpart second abutment surface 25 of the ratchet-type wheel segment 23 of the cutting blade 2. In this configuration, the slider is positioned in the first locking configuration A. An opening angle corresponding to the intermediate opening angle α(i) may for example lie in the range of about 22 degrees.

Coming now to the third locking configuration C of the slider, in which unrestricted pivotal movement of the cutting blade 2 is available, the slider 9, as is depicted in FIG. 4 which shows a cross-sectional view of the secateurs 1 in the fully opened position, is in the third locking position farthest away from the pivot joint 6. This means, that the slider 9 is, with respect to the pivot joint 6, retracted as far as possible, such that the abutment surface 19 of the cantilevered beam 16 lies, with respect to the radial direction relative to the pivot joint 6, outside of the arcuate recess 22 and also outside of the further arcuate recess 24 such that no interference between them is possible. In this configuration, the cutting blades 2, 3 can be fully opened, which in the present case means that a catch hook 26 engages the counterpart second abutment surface 25. The catch hook 26 may for example be implemented and arranged such that the maximal opening angle α(max) (alpha-max) of the cutting blades 2, 3 in the fully opened state lies in the region of about 36 degrees.

FIG. 5 shows a side view of the second handle bar 5 of the secateurs 1, on which the locking lever mechanism 8 and slider 9 are provided. As can be seen from FIG. 5, the lateral arm 11 of the slider 9 and corresponding sections of the arcuate recess 10, in particular a lower edge thereof, may comprise an indexing structure 27 for engaging or snapping in place the slider in the first to third locking configurations A - C. In the configuration shown in FIG. 5, the slider 9 is locked in the first locking configuration A as indicated in FIG. 1, restricting the available opening angle to the intermediate locking angle α(i).

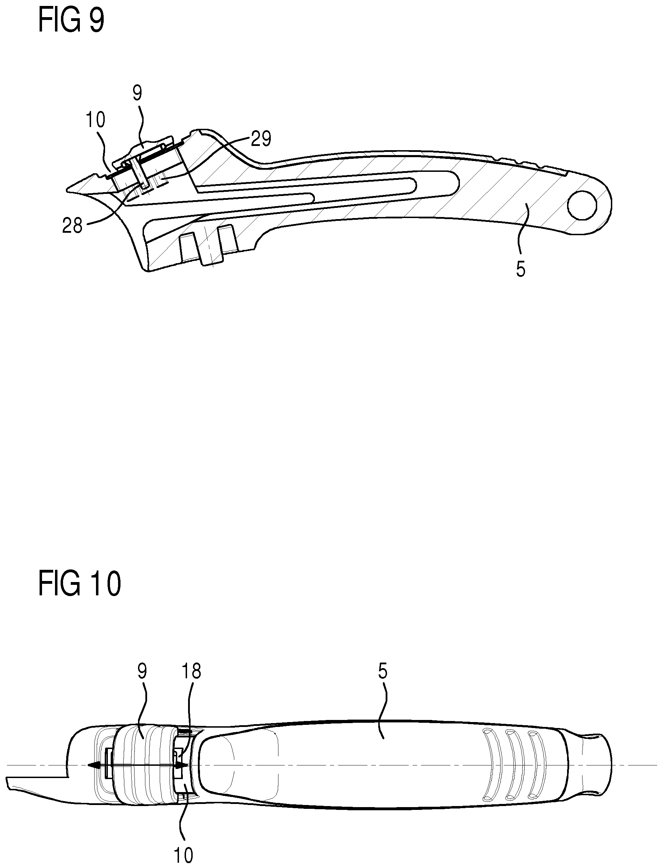

The indexing structure 27 may comprise, as can also inferred from the sectional view of the slider 9 in FIG. 7 and the sectional view of the second handle 5 in FIG. 9, a snap pin 28 or snap projections and corresponding snap recesses 29 or depressions provided along the arched recess 10 in lengthwise direction thereof. The snap pin 28 and snap recesses 29 are implemented such that the slider 9 may be locked in place in the first to third locking configurations A - C.

FIG. 10 shows a top view of the second handle 5 with the slider 9 being in the third first configuration A. From FIG. 10, but also from FIG. 5 and FIG. 9, it can in particular be inferred that movement of the slider 9 within the arched recess 10 is possible in a direction essentially corresponding to the lengthwise direction of the cutting device 1 and/or the lengthwise direction of the second grip handle 5 or at least a section thereof (cf. double arrow in FIG. 10).

The slider 9 is coupled to the arched recess 10 such that it can be moved between the different locking configurations A to C by using, for example, one finger such as the thumb, of the hand actually gripping the secateurs 1. Hence, adjusting the opening angle to different available opening angles or locking the cutting blades 2, 3 in the closed state may be obtained in comparatively easy manual operations.

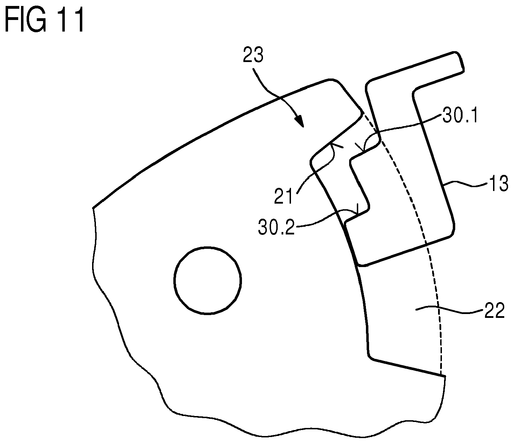

FIG. 11 shows a cross sectional view of a part of the locking lever assembly 8 in an alternative embodiment of the secateurs 1. The major difference to the embodiments shown in FIG. 1 to 10 is that the ratchet-type wheel segment 23 in this embodiment comprises only a single arched recess 22, and that the stop pawl 13 comprises several abutment surfaces 30.1 and 30.2, provided on respective shoulders. The abutment surfaces 30.1 and 30.2 correspond to the locked position in the fully closed state and the intermediate locked position allowing pivotal movements of the cutting blade 2 up to the intermediate opening angle α(i).

The configuration shown in FIG. 11 represents an equivalent solution to that of FIG. 1 to 10 with a somewhat reversed arrangement of the abutment surfaces 30.1, 30.2 and counterpart abutment surfaces 21. It is not the ratchet-type wheel segment 23 that comprises the plurality of counterpart abutment surfaces, but it is the stop pawl 13 that comprises a plurality or several abutment surfaces 30.1, 30.2, which can be selectively brought into engagement with the single arcuate recess 22 by sliding the stop pawl 13 in concert with the slider 9 along the arched recess 10.

In other words, the stop pawl 13 in the alternative embodiment comprises a stepped arrangement of abutment surfaces 30.1, 30.1 designed to engage, by locking the slider (not shown) in respective locking configurations, with the counterpart abutment surface 21 provided at the ratchet-type wheel segment 23.

A depth of the abutment surfaces 30.1 and 30.2 of the stop pawl 13 in this configuration, with respect to the longitudinal direction of the secateurs 1 in the closed configuration, or with respect to the radial direction relative to the pivot joint 6, may for example amount between 2mm and 3mm.

Reference is now again made to FIG. 8 from which it can be inferred that the abutment surface 19 is inclined, such that the height of the cantilevered beam 16 in the region of the abutment shoulder 20 increases towards the distal free end of the cantilevered beam 16. The counterpart abutment surfaces 21 and 25 may have a corresponding inclination such that the stop pawl 13 and ratchet-type wheel segment 23 are forces towards each other in case that the abutment surfaces 19 and counterpart abutment surfaces 21, 25 abut or clash against each other. Thus, the inclined surfaces do provide a self-locking link. This results in additional mechanic stabilization which protects against an undesired opening of the cutting device due to external pulses acting on it (for example when the cutting device falls to the ground). Here it shall be mentioned, that, albeit not explicitly shown in FIG. 11, corresponding inclined surfaces may also be provided for the embodiment shown in FIG. 11, e.g. the abutment surface 30.1 and 30.2 and the counterpart abutment surface 21.

As can in particular be inferred from the above description of exemplary embodiments of the invention, the above described object may readily be obtained.

### List of reference numerals

- 1: secateurs
- 2: cutting blade
- 3: counter cutting blade
- 4: first handle
- 5: second handle
- 6: pivot joint
- 7: spring
- 8: locking lever mechanism
- 9: slider
- 10: arched recess
- 11: lateral arm
- 12: apex section
- 13: stop pawl
- 14: fixing head
- 15: neck section
- 16: cantilevered beam
- 17: fastening structure
- 18: slotted recess
- 19: abutment surface
- 20: abutment shoulder
- 21: counterpart first abutment surface
- 22: arcuate recess
- 23: ratchet-type wheel segment
- 24: further arcuate recess
- 25: counterpart second abutment surface
- 26: catch hook
- 27: indexing structure
- 28: snap pin
- 29: snap recess
- A: first locking configuration
- B: second locking configuration
- C: third locking configuration
- α(i): intermediate opening angle (alpha-i)
- α(max): maximal opening angle (alpha-max)

## Claims

1. Manually operated cutting device (1), in particular secateurs (1) or pruning shears,
comprising at least one cutting blade (2) pivotably secured at a pivot joint (6),
further comprising a locking lever assembly (8) operable to restrict, in one intermediate locking position (A), the available opening angle (α(max)) of the cutting blade (2) to an intermediate opening angle (α(i)) lying between the opening angles defined by the fully closed state and fully opened state of the blade (2)
whereby the locking lever assembly (8) comprises a stop pawl (13) that is attached to a manually operable slider (9) associated with a linear slide (10) to be moveable into and out of the intermediate locking position (A) by a movement in lengthwise direction of the cutting device (1), in addition the locking lever assembly (8, 13) comprises at least one cantilevered beam section (16) oriented in parallel to an opening plane defined by the cutting blade (2), the cantilevered beam section (16) having, on its distal free end, an abutment (19, 20; 30.2) for abutting against a counterpart abutment (21) in the intermediate rotational position of the cutting blade (2) to thereby restrict rotation of the cutting blade (2) to the intermediate opening angle (α(i)), wherein the stop pawl (13) and slider (9) are implemented as separate parts fixed to each other, the stop pawl (13) comprises a fixing head (14) for fixing the stop pawl (13) to the slider (9), **characterized in that**
the stop pawl (13) has an overall L-shaped configuration, has a bar-shaped neck section (15) interconnecting the fixing head (14) with the at least one cantilevered beam section (16).

2. Manually operated cutting device (1) according to claim 1, wherein the locking lever assembly (8, 13) comprises as one of the at least one cantilevered beam sections (16) a locking surface (19, 30.1) for locking engagement with a counterpart locking surface (21) to thereby lock the cutting blade (2) in the fully closed state.

3. Manually operated cutting device (1) according to claim 1 or 2, at least one of the abutment surface (19, 30.1, 30.2), counterpart abutment surface (21, 25), locking surface and counterpart locking surface being inclined with respect to the lengthwise direction of a corresponding cantilevered arm (16) so as to generate a self-locking effect between the surface (19, 30.1, 30.2) and corresponding counterpart surface (21, 25).

4. Manually operated cutting device (1) according to at least one of claims 1 to 3, the locking lever assembly (8) further being operable to lock, in a locking operational state (B), the cutting blade (2) in the closed state, and, in an unlocking operational state (C), to enable unrestricted rotation of the cutting blade (2) between the fully closed and fully opened state.

5. Manually operated cutting device (1) according to at least one of claims 1 and 4, the slider (9) having an arched cross section and being slidably coupled to an elongated arched recess (10), the arched recess (10) preferably being implemented on an outer lateral side of an operating arm (5) associated with a counterpart cutting blade (3).

6. Manually operated cutting device (1) according to at least one of claims 1 to 5, the slider (9) comprising a indexing contour (27) for locking the slider (9) at least in a first indexing position (A) associated with the intermediate locking position, the indexing contour (27) preferably being implemented on one of at least two lateral arms (11) projecting from an apex section (12) of the slider (9), the indexing contour (27) further preferably comprising at least one of a second (B) and third indexing position (C) respectively assigned to the fully closed position and fully opened position.

7. Manually operated cutting device (1) according to claim 5 and 6, wherein a linear guide of the linear slide implemented on an inner side at a distal end of at least one of the lateral arms (11), engages a counterpart guide implemented in the arched recess (10), the linear guide and linear counterpart guide preferably being implemented as a guide-bar and guide-rail combination.

8. Manually operated cutting device (1) according to at least one of claims 1 to 7, the stop pawl (13) and fixing head (14) project from opposite sides of a slotted guide recess (18) provided in a handle bar (5) of the cutting device (1), the fixing head (14) preferably comprising a sliding contour for sliding engagement with the slotted guide recess (18) to be moveable in lengthwise direction thereof.

9. Manually operated cutting device (1) according to claim 1 or 8, the at least one cantilevered beam (16) section projects from the neck section (15) towards the pivot joint (6).

10. Manually operated cutting device (1) according to at least one of claims 8 or 9, in which the stop pawl (13) and fixing head (14) project from opposite sides of the slotted guide recess (18) provided in the handle bar (5) of the cutting device (1), the slotted guide recess (18) being configured such that the stop pawl (13) is moveable in a linear motion towards and away from the pivot joint (6), wherein, preferably, a second slider locking position (B) located closest to the pivot joint (6) being associated with the fully closed state, wherein a third slider locking position (C) located farthest away from the pivot joint (6) being associated with the unlocked position of the cutting blade (2), and wherein a first locking position (A) lying between the second (B) and third locking position (C) being associated with the intermediate locking position in which the available opening angle of the blade (2) is restricted to the intermediate opening angle (α(i)).

11. Manually operated cutting device (1) according to at least one of claims 1 to 10, the locking lever assembly (8) comprising at least one arcuate recess (22, 24) extending, with respect to the pivot joint (6) in circumferential direction and in parallel to the opening plane of the cutting blade (2), and associated with, preferably formed integrally with, the cutting blade (2), the recess (22, 24) defining at at least one peripheral end in circumferential direction a counterpart abutment surface (21, 25), the counterpart abutment surface (21, 25) being implemented such that it abuts against an abutment surface (19, 30.2) of the stop pawl (13) in case that the actual opening angle of the cutting blade (2) corresponds to the intermediate opening angle (α(i)), wherein normal vectors of the counterpart abutment surface (21, 25) and abutment surface (19, 30.2) preferably being oriented parallel to the opening plane of the cutting blade (2).

12. Manually operated cutting device (1) according to claim 11, one of the at least one arcuate recess (22) being associated with the fully closed state and defining at a peripheral end thereof a locking surface (21) for locking engagement with a **locking surface** (19) **of the stop pawl (13)** in the fully closed state of the cutting blade (2).

13. Manually operated cutting device (1), according to at least one of claims 1 to 12, the maximal opening angle (α(max)) corresponding to the fully opened state being in the range of about 36°, and the intermediate opening angle (α(i)) being in the range of about 22°.

14. Manually operated cutting device (1) according to at least one of claims 1 to 13 the locking lever assembly (8) being associated with a grip handle (5), preferably with a stem of a grip handle (5), of a further cutting blade (3) acting as a counter cutting blade for the cutting blade (2).

## Patentansprüche

1. Manuell betriebene Schneidevorrichtung (1), insbesondere Gartenschere (1) oder Baumschere,
umfassend mindestens ein Schneidmesser (2), das schwenkbar an einem Drehgelenk (6) befestigt ist,
ferner umfassend eine Verriegelungshebelanordnung (8), die betätigbar ist um in einer Zwischenverriegelungsposition (A) den verfügbaren Öffnungswinkel (a(max)) des Schneidmessers (2) auf einen Zwischenöffnungswinkel (α(i)) zu beschränken, der zwischen den durch den vollständig geschlossenen Zustand und den vollständig geöffneten Zustand des Messers (2) definierten Öffnungswinkeln liegt, wobei die Verriegelungshebelanordnung (8) eine Sperrklinke (13) umfasst, die an einem manuell betätigbaren Schieber (9) befestigt ist, der mit einem Linearschieber (10) verbunden ist, der durch eine Bewegung in Längsrichtung der Schneidevorrichtung (1) in die und aus der Zwischenverriegelungsposition (A) bewegbar ist, zusätzlich umfasst die Verriegelungshebelanordnung (8, 13) mindestens einen freitragenden, parallel zu einer durch das Schneidmesser (2) definierten Öffnungsebene ausgerichteten Trägerabschnitt (16), wobei der freitragende Trägerabschnitt (16) an seinem distalen freien Ende einen Anschlag (19, 20; 30.2) aufweist, der in der Zwischendrehposition des Schneidmessers (2) gegen einen Gegenanschlag (21) anliegt, um dadurch die Drehung des Schneidmessers (2) auf den Zwischenöffnungswinkel (α(i)) zu begrenzen, wobei die Sperrklinke (13) und der Schieber (9) als Einzelteile ausgeführt sind, die aneinander befestigt sind, wobei die Sperrklinke (13) einen Fixierkopf (14) zur Befestigung der Anschlagklinke (13) am Schieber (9) aufweist,
**dadurch gekennzeichnet, dass**
die Sperrklinke (13) insgesamt L-förmig ausgebildet ist, einen stabförmigen Halsabschnitt (15) aufweist, der den Fixierkopf (14) mit dem mindestens einen freitragenden Trägerabschnitt (16) verbindet.

2. Manuell betriebene Schneidevorrichtung (1) nach Anspruch 1, wobei die Verriegelungshebelanordnung (8, 13) als einen der mindestens einen freitragenden Trägerabschnitte (16) eine Verriegelungsfläche (19, 30.1) zum Verriegeln mit einer Gegenverriegelungsfläche (21) umfasst, um dadurch das Schneidmesser (2) im vollständig geschlossenen Zustand zu verriegeln.

3. Manuell betriebene Schneidevorrichtung (1) nach Anspruch 1 oder 2, wobei mindestens eine Anschlagsfläche (19, 30.1, 30.2), Gegenanschlagsfläche (21, 25), Verriegelungsfläche und Gegenverriegelungsfläche in Bezug auf die Längsrichtung eines entsprechenden freitragenden Arms (16) so geneigt ist, dass eine Selbstsperrung zwischen der Oberfläche (19, 30.1, 30.2) und der entsprechenden Gegenoberfläche (21, 25) entsteht.

4. Manuell betriebene Schneidevorrichtung (1) nach mindestens einem der Ansprüche 1 bis 3, wobei die Verriegelungshebelanordnung (8) ferner betätigbar ist, um das Schneidmesser (2) im geschlossenen Zustand in einem verriegelnden Betriebszustand (B) zu verriegeln, und um eine uneingeschränkte Drehung des Schneidmessers (2) zwischen dem vollständig geschlossenen und dem vollständig geöffneten Zustand in einem entriegelten Betriebszustand (C) zu ermöglichen.

5. Manuell betriebene Schneidevorrichtung (1) nach mindestens einem der Ansprüche 1 und 4, wobei der Schieber (9) einen gewölbten Querschnitt aufweist und verschiebbar mit einer länglichen gewölbten Aussparung (10) gekoppelt ist, wobei die gewölbte Aussparung (10) vorzugsweise an einer äußeren seitlichen Seite eines Betätigungsarms (5) ausgeführt ist, der mit einem Gegenschneidmesser (3) verbunden ist.

6. Manuell betriebene Schneidevorrichtung (1) nach mindestens einem der Ansprüche 1 bis 5, wobei der Schieber (9) eine Indexierkontur (27) zum Verriegeln des Schiebers (9) zumindest in einer ersten Indexierposition (A) umfasst, die der Zwischenverriegelungsposition zugeordnet ist, wobei die Indexierkontur (27) vorzugsweise an einem von mindestens zwei seitlichen Armen (11) ausgebildet ist, die von einem Scheitelabschnitt (12) des Schiebers (9) vorstehen, wobei die Indexierkontur (27) weiter vorzugsweise mindestens eine zweite (B) und dritte Indexierposition (C) umfasst, die jeweils der vollständig geschlossenen Position und der vollständig geöffneten Position zugeordnet sind.

7. Manuell betriebene Schneidevorrichtung (1) nach den Ansprüchen 5 und 6, wobei eine lineare Führung des Linearschlittens, die auf einer Innenseite an einem distalen Ende von mindestens einem der seitlichen Arme (11) ausgebildet ist, in eine Gegenstückführung eingreift, die in der gewölbten Aussparung (10) ausgebildet ist, wobei die lineare Führung und die lineare Gegenführung vorzugsweise als Führungsstange und Führungsschienen-Kombination ausgebildet sind.

8. Manuell betriebene Schneidevorrichtung (1) nach mindestens einem der Ansprüche 1 bis 7, wobei die Sperrklinke (13) und der Fixierkopf (14) von gegenüberliegenden Seiten einer in einem Handgriff (5) der Schneidvorrichtung (1) vorgesehenen geschlitzten Führungsaussparung (18) vorstehen, wobei der Fixierkopf (14) vorzugsweise eine Gleitkontur zum gleitenden Eingriff in die geschlitzte Führungsaussparung (18) umfasst, um in deren Längsrichtung bewegbar zu sein.

9. Manuell betriebene Schneidevorrichtung (1) nach Anspruch 1 oder 8, wobei der mindestens eine freitragende Trägerabschnitt (16) vom Halsabschnitt (15) zum Drehgelenk (6) vorsteht.

10. Manuell betriebene Schneidevorrichtung (1) nach mindestens einem der Ansprüche 8 oder 9, wobei die Sperrklinke (13) und Fixierkopf (14) von gegenüberliegenden Seiten der im Handgriff (5) der Schneidvorrichtung (1) vorgesehenen geschlitzten Führungsaussparung (18) vorstehen, wobei die geschlitzte Führungsaussparung (18) so ausgebildet ist, dass die Sperrklinke (13) in einer linearen Bewegung zum Drehgelenk (6) hin und von diesem weg bewegbar ist, wobei vorzugsweise eine zweite Schieberverriegelungsposition (B), die am nächsten an dem Drehgelenk (6) liegt, dem vollständig geschlossenen Zustand zugeordnet ist, wobei eine dritte Schieberverriegelungsposition (C), die am weitesten von dem Drehgelenk (6) entfernt ist, der entriegelten Position des Schneidmessers (2) zugeordnet ist, und wobei eine erste Verriegelungsstellung (A), die zwischen der zweiten (B) und der dritten Verriegelungsstellung (C) liegt, der Zwischenverriegelungsposition zugeordnet, in der der verfügbare Öffnungswinkel des Messers (2) auf den Zwischenöffnungswinkel (α(i)) begrenzt ist.

11. Manuell betriebene Schneidevorrichtung (1) nach mindestens einem der Ansprüche 1 bis 10, wobei die Verriegelungshebelanordnung (8) mindestens eine gewölbte Aussparung (22, 24) umfasst, die sich bezüglich des Drehgelenks (6) in Umfangsrichtung und parallel zur Öffnungsebene des Schneidmessers (2) erstreckt, und verbunden ist mit der vorzugsweise einstückig ausgebildeten Schneidklinge (2), wobei die Aussparung (22, 24) an mindestens einem peripheren Ende in Umfangsrichtung eine Gegenanschlagsfläche (21, 25) definiert, wobei die Gegenanschlagsfläche (21, 25) derart ausgebildet ist, dass sie an einer Anschlagsfläche (19, 30.2) der Sperrklinke (13) anliegt, wenn der tatsächliche Öffnungswinkel des Schneidmessers (2) dem Zwischenöffnungswinkel (α(i)) entspricht, wobei normale Vektoren der Gegenanschlagsfläche (21, 25) und der Anschlagsfläche (19, 30.2) vorzugsweise parallel zur Öffnungsebene des Schneidmessers (2) ausgerichtet sind.

12. Manuell betriebene Schneidevorrichtung (1) nach Anspruch 11, wobei eine der mindestens einen gewölbten Aussparung (22) dem vollständig geschlossenen Zustand zugeordnet ist und an einem peripheren Ende davon eine Verriegelungsfläche (21) für einen Verriegelungseingriff mit einer **Verriegelungsfläche** (19) **der Sperrklinke** (13) im vollständig geschlossenen Zustand des Schneidmessers (2) definiert.

13. Manuell betriebene Schneidevorrichtung (1) nach mindestens einem der Ansprüche 1 bis 12, wobei der maximale Öffnungswinkel (a(max)) im Bereich von etwa 36° dem vollständig geöffneten Zustand entspricht und der Zwischenöffnungswinkel (α(i)) im Bereich von etwa 22° liegt.

14. Manuell betriebene Schneidevorrichtung (1) nach mindestens einem der Ansprüche 1 bis 13, wobei die Verriegelungshebelanordnung (8) mit einem Handgriff (5), vorzugsweise einem Schaft eines Handgriffes (5), eines weiteren Schneidmessers (3) verbunden ist, das als Gegenmesser für das Schneidmesser (2) dient.

## Revendications

1. Dispositif de coupe manuel (1), notamment sécateurs (1) ou cisaille,
comprenant au moins une lame de coupe (2) fixée à pivotement sur une articulation pivotante (6),
comprenant en outre un ensemble de levier de verrouillage (8) pouvant être utilisé pour limiter, dans une position de verrouillage intermédiaire (A), l'angle d'ouverture disponible (α(max)) de la lame de coupe (2) à un angle d'ouverture intermédiaire (α(i)) se situant entre les angles d'ouverture définis par l'état complètement fermé et l'état complètement ouvert de la lame (2)
dans lequel l'ensemble de levier de verrouillage (8) comprend un cliquet d'arrêt (13) qui est fixé à un coulisseau (9) pouvant être actionné manuellement associé à un coulisseau linéaire (10) pouvant être déplacé dans et dehors de la position de verrouillage intermédiaire (A) mouvement dans le sens de la longueur du dispositif de coupe (1),
en outre l'ensemble de levier de verrouillage (8, 13) comprend au moins une section de poutre en porte à faux (16) orientée parallèlement à un plan d'ouverture défini par la lame de coupe (2), la section de poutre en porte à faux (16) ayant, à son extrémité libre distale, une butée (19, 20; 30.2) pour venir en butée contre une contre-butée (21) dans la position de rotation intermédiaire de la lame de coupe (2) pour limiter ainsi la rotation de la lame de coupe (2) à l'angle d'ouverture intermédiaire (α(i)),
dans lequel
le cliquet d'arrêt (13) et coulisseau (9) sont réalisés sous forme de pièces séparées fixées l'une à l'autre, le cliquet d'arrêt (13) comporte une tête de fixation (14) tête de fixation la cliquet d'arrêt (13) au coulisseau (9),
**caractérisé en ce que**
le cliquet d'arrêt (13) présente une configuration globale en forme de L, comporte une section de col en forme de barre (15) reliant la tête de fixation (14) à la au moins une section de poutre en porte à faux (16).

2. Dispositif de coupe manuel (1) selon la revendication 1, dans lequel l'ensemble de levier de verrouillage (8, 13) comprend comme une des au moins une sections de poutre en porte à faux (16) une surface de verrouillage (19, 30.1) pour verrouiller avec une surface de contre-verrouillage (21) pour verrouiller ainsi la lame de coupe (2) à l'état complètement fermé.

3. Dispositif de coupe manuel (1) selon la revendication 1 ou 2, au moins une de la surface de butée (19, 30.1, 30.2), surface de contre-butée (21, 25), surface de verrouillage et surface de contre-verrouillage étant inclinées par rapport à dans la direction longitudinale d'un bras en porte-à-faux correspondant (16) de manière à générer un effet d'auto-blocage entre la surface (19, 30.1, 30.2) et la contre-surface correspondante (21, 25).

4. Dispositif de coupe manuel (1) selon au moins l'une des revendications 1 to 3, l'ensemble de levier de verrouillage (8) pouvant en outre être utilisé pour verrouiller, dans un état opérationnel de verrouillage (B), la lame de coupe (2) dans l'état fermé et, dans un état de déverrouillage opérationnel (C), permettre une rotation sans restriction de la lame de coupe (2) entre l'état complètement fermé et complètement ouvert.

5. Dispositif de coupe manuel (1) selon au moins l'une des revendications 1 and 4, le coulisseau (9) présentant une section transversale arquée et étant couplé de manière coulissante à un évidement arqué allongé (10), l'évidement arqué (10) étant mis en oeuvre sur un côté latéral extérieur d'un bras d'actionnement (5) associé à une lame de coupe correspondante (3).

6. Dispositif de coupe manuel (1) selon au moins l'une des revendications 1 to 5, le coulisseau (9) comprenant un contour d'indexation (27) pour verrouiller le coulisseau (9) au moins dans une première position d'indexation (A) associée avec la position de verrouillage intermédiaire, le contour d'indexation (27) étant de préférence mis en oeuvre sur l'un des au moins deux bras latéraux (11) faisant saillie d'un sommet (12) du coulisseau (9), le contour d'indexation (27) comprenant de préférence au moins une parmi une deuxième (B) et une troisième position d'indexation (C) respectivement affectées à la position complètement fermée et à la position complètement ouverte.

7. Dispositif de coupe manuel (1) selon la revendication 5 et 6, dans lequel un un guide linéaire du coulisseau linéaire réalisé sur un côté intérieur à une extrémité distale d'au moins l'un des bras latéraux (11), engage un guide de contrepartie mis en oeuvre dans l'évidement arqué (10), le guide linéaire et le guide linéaire de contrepartie sont de préférence réalisés sous la forme d'une combinaison de barre de guidage et de rail de guidage.

8. Dispositif de coupe manuel (1) selon au moins l'une des revendications 1 to 7, le cliquet d'arrêt (13) et la tête de fixation (14) font saillie de côtés opposés d'un évidement de guidage à fentes (18) prévu dans un guidon (5) du dispositif de coupe (1), la tête de fixation (14) comprenant de préférence un contour coulissant pour un engagement coulissant avec l'évidement de guidage à fente (18) pour pouvoir se déplacer dans le sens de la longueur de celui-ci.

9. Dispositif de coupe manuel (1) selon la revendication 1 ou 8, l'au moins une section de poutre en porte-à-faux (16) fait saillie de la section de col (15) vers l'articulation pivotante (6).

10. Dispositif de coupe manuel (1) selon au moins l'une des revendications 8 ou 9, dans lequel le cliquet d'arrêt (13) et la tête de fixation (14) font saillie depuis des côtés opposés de l'évidement de guidage à fente (18) prévu dans le guidon (5) du dispositif de coupe (1), l'évidement de guidage à fentes (18) étant configurée de telle sorte que le cliquet d'arrêt (13) puisse se déplacer linéairement vers et à l'écart de l'articulation pivotante (6), dans lequel, de préférence, une deuxième position de verrouillage de coulisseau (B) située le plus près de l'articulation pivotante (6) étant associée à l'état complètement fermé, une troisième position de verrouillage de coulisseau (C) située la plus éloignée de l'articulation pivotante (6) étant associée avec la position déverrouillée de la lame de coupe (2), et dans lequel une première position de verrouillage (A) située entre la deuxième (B) et la troisième position de verrouillage (C) étant associée avec la position de verrouillage intermédiaire dans laquelle l'angle d'ouverture disponible de la lame (2) est limitée à l'angle d'ouverture intermédiaire (α(i)).

11. Dispositif de coupe manuel (1) selon au moins l'une des revendications 1 à 10, l'ensemble de levier de verrouillage (8) comprenant au moins une évidement arqué (22, 24) s'étendant par rapport à l'articulation pivotante (6) dans direction circonférentielle et parallèle au plan d'ouverture de la lame de coupe (2) et associée, de préférence formée d'une seule pièce avec la lame de coupe (2), l'évidement (22, 24) définissant au moins une extrémité périphérique dans la direction circonférentielle une surface de contre-butée (21, 25), la surface de contre-butée (21, 25) étant mise en place de telle sorte qu'elle vienne en butée contre une surface de butée (19, 30.2) du cliquet d'arrêt (13) dans le cas où l'angle d'ouverture réel de la lame de coupe (2) correspond à l'angle d'ouverture intermédiaire (α(i)), les vecteurs normaux de la surface de contre-butée (21, 25) et de la surface de butée (19, 30.2) étant de préférence orientés parallèlement au plan d'ouverture de la lame de coupe (2).

12. Dispositif de coupe manuel (1) selon la revendication 11, l'un des au moins un évidements arqués (22) étant associé à l'état complètement fermé et définissant à son extrémité périphérique une surface de verrouillage (21) pour verrouiller avec une surface de verrouillage (19) du cliquet d'arrêt (13) dans l'état complètement fermé de la lame de coupe (2).

13. Dispositif de coupe manuel (1), selon au moins l'une des revendications 1 à 12, l'angle d'ouverture maximal (α(max)) correspondant à l'état complètement ouvert étant d'environ 36°, et l'angle d'ouverture intermédiaire (α(i)) étant d'environ 22°.

14. Dispositif de coupe manuel (1) selon au moins l'une des revendications 1 à 13 l'ensemble de levier de verrouillage (8) étant associé à une poignée de préhension (5), de préférence avec une tige de poignée de préhension (5), d'une autre lame de coupe (3) servant de lame de contre-coupe pour la lame de coupe (2).
